# EUROPEAN PATENT APPLICATION

(11) **EP 0 577 161 A1**
(43) Date of publication of application: **05.01.1994**
(21) Application number: 93201043.2
(22) Date of filing: 08.04.1993
(51) Int. Cl.: B03B 9/06

(54) **Method for separating various types of packing waste materials**

(30) Priority: 29.06.1992 NL 9201151
(71) Applicant: N.V. VUILAFVOER MAATSCHAPPIJ VAM, NL-1071 ZD Amsterdam (NL)
(72) Inventor: Esmeijer, Frederik Gerrit, NL-7327 CK Apeldoorn (NL)
(74) Representative: Lips, Hendrik Jan George, Ir.

(57) **Abstract**

Method for separating various types of packing waste materials by subjecting them to the following treatments: a) supply to a bag tearing device (2), b) supply to a sieve (4) for separating into fractions (5, 6, 7), c) passing under a magnetic separator (8), d) discharging the remaining part (9) of the finest fraction (5), e) supplying a part (10) of the less fine fraction (6) to a zigzag filter (11) for separating plastic foil (12), f) supplying the remaining part (13) to a non-ferro separator (14), g) supplying the then remaining part (17) to a separating device (21, 38) for separating form-retaining or hard products, h) supplying the remaining part (23, 40) to a cascade separator (24) and i) supplying the remaining part (27) of the coarse fraction (7) to a sorting device (28) for separating plastic foil (29).

## Description

The invention relates to a method for separating various types of packing waste materials such as household packing waste, office, shop and services packings and packing waste.

Such waste is understood to mean plastics in various forms, metals, soft drink cartons and the like.

There is an ever-increasing need for separating such waste in connection with the possibility of recycling the materials and in order to prevent burdening of the environment.

In the known methods, the materials concerned are substantially separated by hand, but it will be obvious that this is a time-consuming, thus expensive, and an unpleasant occupation as well.

The invention now provides a method, characterized in that the waste is substantially subjected to the following treatments: a) supply to a bag tearing device which arranges for that, when the waste is supplied at least partially in bags, these bags are torn up, b) supply to a sieve, such as a barrel sieve for separating the waste into a number, such as particularly three, of fractions from fine to coarse, c) passing the fractions under a magnetic separator for separating magnetizable material therefrom, d) discharging the remaining part of the fine fraction, e) supplying the remaining part of the successive less fine fraction to a zigzag filter, substantially for separating plastic foil, f) supplying the remaining part of this fraction to a non-ferro separator, g) supplying the then remaining part of this fraction to a cascade separator, a vibrating table separator or a similar device for separating form-retaining or hard products, h) supplying the remaining part to a cascade separator and i) supplying the part of the coarsest fraction remaining after the magnetic separator to a sorting device in order to separate plastic foil therefrom.

In this way, a high degree of automatic separation of materials can be achieved. Further, it should be noted that a cascade separator such as can be applied, is described in for example not pre-published Dutch patent application 9102124.

In particular, the barrel sieve or similar sieving device will provide for a separation of the material into parts having a size of about 1 to 70 mm; 70 to 180 mm and larger than 180 mm.

According to an embodiment of the invention, it can be provided for that the magnetizable material, which has been separated from the less fine fraction in the magnetic separator, is led through a tinplate separator for separating tinplate and iron from each other.

On leading the fraction through the non-ferro separator, as indicated at f), in particular a separation of hard parts, like metals, and soft parts like soft drink cartons, plastic foil and the like will be provided for.

The soft parts can subsequently be led through a rising sifter for substantially separating soft drink cartons and plastic foil.

Such a non-ferro separator can be provided with one or more partitions and further, one can use post-separators, post-sifters, sieving and bevelled band separators.

The plastic foils obtained from the various treatments can be compressed in bale presses so that the materials obtained take up as little space as possible during transport to the device where further handling thereof can take place.

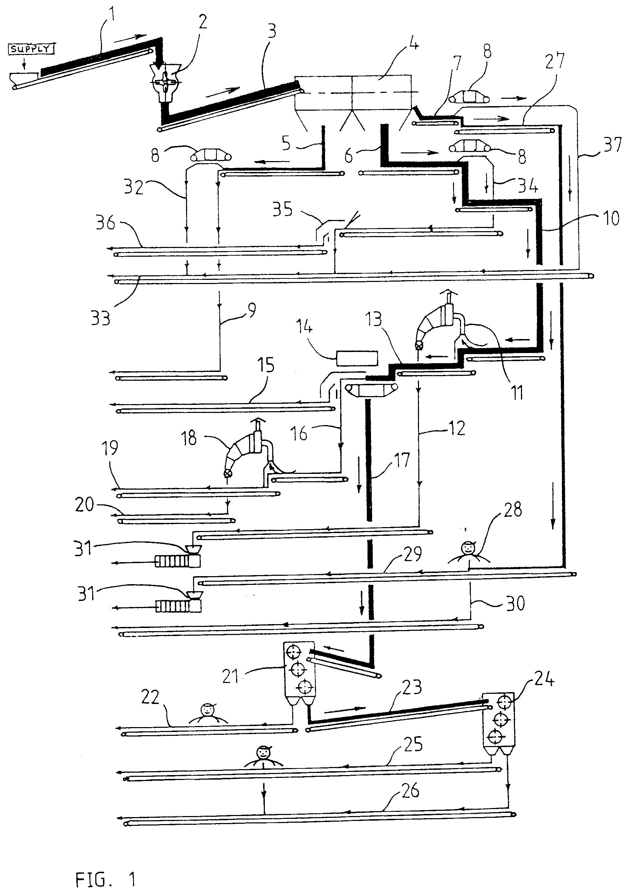

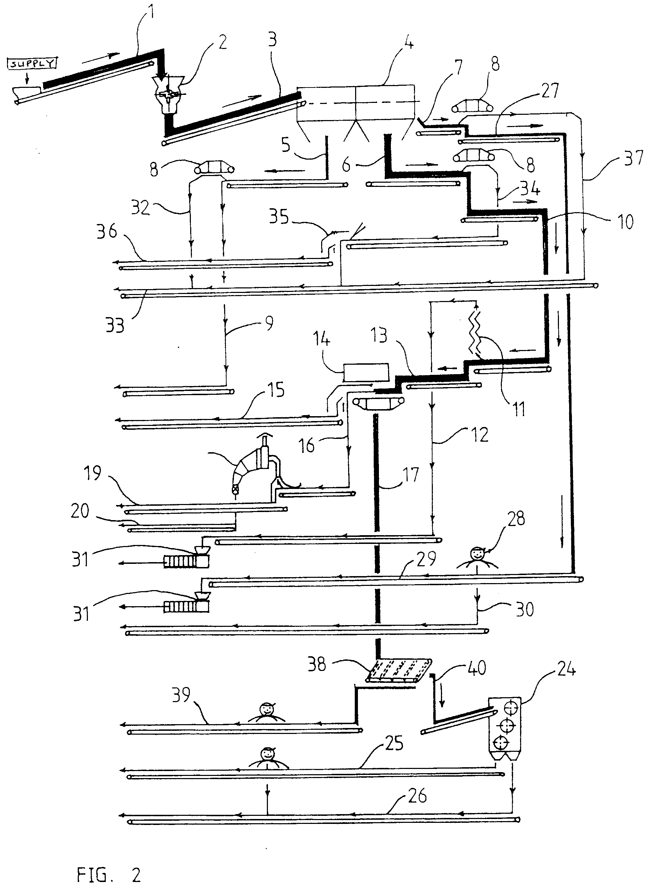

The invention is further explained by way of two embodiments shown in the figures 1 and 2 of the accompanying drawing.

In fig. 1, the waste 1 is supplied to a bag tearing device 2, from where the released material 3 is supplied to the barrel sieve 4. The barrel sieve 4 separates the waste into the fractions 5, 6 and 7, having a size of about 0 to 70, 70 to 180 and larger than 180 mm respectively. In general, the fraction 6 relatively will comprise the largest amount of material.

Each fraction 5, 6 and 7 is led through a magnetic separator 8. The remaining finest fraction 9 is discharged from the device.

The part 10 of the fraction 6 remaining after the magnetic separator 8 is supplied to a zigzag filter 11 for separating plastic foil 12 therefrom, while the remaining part 13 of this fraction is supplied to a non-ferro separator 14. In this separator 14, hard materials 15, such as tinplate, and certain further parts 16, such as soft drink cartons and plastic materials, are separated from the further fraction 17. The parts 16 can be separated from each other yet further in the rising sifter 18 for separating soft drink cartons 19 and plastic foils 20.

The fraction 17 is supplied to the cascade separator 21 for separating hard plastics 22, while the remaining fraction 23 is supplied to a next cascade separator 24 in which in particular soft drink cartons 25 can be separated from the remaining part 26.

The fraction 27, which remains after the coarsest fraction 7 coming from the barrel sieve 4 has passed the magnetic separator 8, is supplied to a separating device 28 for removing plastic foil 29 therefrom, while the remaining fraction 30 is discharged from the device.

The separated plastic foils 12 and 29 are both supplied to a bale press 31.

The magnetizable material removed from the fraction 5 by the magnetic separator 8 will substantially be formed by iron which is supplied to the conveyor 33.

The magnetizable material 34, separated from the fraction 6, is supplied to the tinplate separator 35, such that a part thereof, substantially consisting of iron, will end up on the conveyor 33 and another part, substantially consisting of tinplate, on the conveyor 36.

The magnetizable material 37, which has been separated from the fraction 7 by the magnetic separator 8 will substantially consist of iron and be supplied to the conveyor 33.

The device according to fig. 2 corresponds largely to that of fig. 1 and corresponding parts and partial streams have therefore been indicated with the same reference numbers.

The zigzag filter 11 has indeed been designed in a different way than with the embodiment according to fig. 1, but its operation will be largely the same.

Here, the fraction 17 is not supplied to a cascade separator 21, but to a vibrating table separator 38 for separating form-retaining products 39, such as for example plastic bottles, while the remaining fraction 40 is supplied to a cascade separator 24 like in the embodiment according to figure 1.

As appears from the above, soft drink cartons, for example, can be removed from the fraction 6 in various ways and thus at various positions. This can be realized both by the shape and size of such cartons and by the operation of the various devices in which the separation takes place.

It will be obvious that only some possible embodiments of a method according to the invention have been illustrated in the drawing and described above, and that many modifications can be made without being beyond the inventive idea.

## Claims

1. Method for separating various types of packing waste materials such as household packing waste, office, shop and services packings and packing waste, characterized in that the waste is substantially subjected to the following treatments: a) supply to a bag tearing device (2) which arranges for that, when the waste is supplied at least partially in bags, these bags are torn up, b) supply to a sieve, such as a barrel sieve (4) for separating the waste into a number, such as particularly three, of fractions (5, 6, 7) from fine to coarse, c) passing the fractions under a magnetic separator (8) for separating magnetizable material therefrom, d) discharging the remaining part (9) of the fine fraction (5), e) supplying the remaining part (10) of the successive less fine fraction (6) to a zigzag filter (11), substantially for separating plastic foil (12), f) supplying the remaining part (13) of this fraction (6) to a non-ferro separator (14), g) supplying the then remaining part (17) of this fraction (13) to a cascade separator (21), a vibrating table separator (38) or a similar device for separating form-retaining or hard products, h) supplying the remaining part (23, 40) to a cascade separator (24) and i) supplying the part (27) of the coarsest fraction (7) remaining after the magnetic separator (8) to a sorting device (28) in order to separate plastic foil (29) therefrom.

2. Method according to claim 1, characterized in that the barrel sieve (4) or similar sieving device provides for a separation of the material into parts (5, 6, 7) having a size of about 1 to 70 mm; 70 to 180 mm and larger than 180 mm.

3. Method according to claim 1 or 2, characterized in that the magnetizable material, which has been separated from the less fine fraction (6) in the magnetic separator (8), is led through a tinplate separator (35) for separating tinplate and iron from each other.

4. Method according to one of the preceding claims, characterized in that on leading the remaining part (13) of the less fine fraction (6) through the non-ferro separator (14), as indicated with the treatment at f), a separation of hard parts (15), like metals, and soft parts (16) like soft drink cartons, plastic foil and the like is provided for.

5. Method according to claim 4, characterized in that the soft parts (16) obtained after the non-ferro separator (14), are led through a rising sifter (18) for substantially separating soft drink cartons (19) and plastic foil (20).

6. Method according to claim 4 or 5, characterized in that the non-ferro separator (14) has been provided with one or more partitions and that further, post-separators, post-sifters, sieving and bevelled band separators are used.

7. Method according to one of the preceding claims, characterized in that the plastic foils obtained from the various treatments are compressed in bale presses (31).
